# EUROPÄISCHE PATENTANMELDUNG

(11) **EP 1 903 435 A1**
(43) Veröffentlichungstag der Anmeldung: **26.03.2008**
(21) Anmeldenummer: 06019895.9
(22) Anmeldetag: 22.09.2006
(51) Int. Cl.: G06F 9/44, G05B 23/02, G05B 19/418

(54) **System und Verfahren zur dynamischen Darstellung von Prozesszuständen in einem Automatisierungssystem**

(71) Anmelder: SIEMENS AKTIENGESELLSCHAFT, 80333 München (DE)
(72) Erfinder: Grossmann, Volker Björn, 76287 Rheinstetten (DE); Koch, Ursula, 76870 Kandel (DE); Waidner, Gabriele, 76332 Bad Herrenalb (DE); Stierand, Ulrich, 76149 Karlsruhe (DE)

(57) **Zusammenfassung**

Die Erfindung betrifft ein Verfahren und eine Vorrichtung (1) zur grafischen Projektierung mindestens einer Oberfläche eines zur Visualisierung und/oder Steuerung einer automatisierten Anlage dienenden Bedien- und Beobachtungssystems, mit Auswahlmitteln (2) zur Selektion eines auf der zu projektierenden Oberfläche darzustellenden grafischen Objektes (3) durch einen Projekteur, wobei das Objekt eine Zustandsvariable der automatisierten Anlage repräsentiert und mit einer Eingabemaske (4) zur Eingabe von die grafischen Eigenschaften des Objektes beschreibenden Bedingungen durch den Projekteur, wobei die grafischen Eigenschaften des Objektes in Abhängigkeit vom aktuellen Wert der Zustandsvariablen darstellbar sind.

## Beschreibung

Die Erfindung betrifft eine Vorrichtung sowie ein Verfahren zur grafischen Projektierung mindestens einer Oberfläche eines zur Visualisierung und/oder Steuerung einer automatisierten Anlage dienenden Bedien- und Beobachtungssystems.

Im Bereich des Engineering von Bedien- und Beobachtungssystemen zur Visualisierung oder Steuerung einer automatisierten Anlage werden von dem Projekteur bzw. dem Anwender des Engineering-Systems Objekte, beispielsweise so genannte Buttons zur Visualisierung der automatisierten Anlage verwendet. In der Regel weisen diese Objekte häufig ein dynamisches Verhalten (Dynamiken) auf, welches in Abhängigkeit von den Zustandswerten der automatisierten Anlage bzw. in Abhängigkeit von Prozesswerten eines automatisierten Fertigungs- oder Produktionsprozesses steht. Hierbei ändert sich das Verhalten der Objekte mit Änderung der Zustände der Variablen bzw. Prozesswerte.

Im Rahmen der Projektierung der Oberfläche bzw. des Engineering des Bedien- und Beobachtungssystems möchte der Projekteur u.U. mehrere grafische Eigenschaften eines Objektes, welches er auf der Oberfläche darstellen will, in Abhängigkeit von einer Bedingung, d.h. in Abhängigkeit von dem Zustand des Wertes der Zustandsvariablen bzw. des Prozesswertes darstellen.

Hierzu dienen in den bekannten Systemen in der Regel eine Reihe von Dialogen. Bei diesen Dialogen handelt es sich um eine Form der grafischen Projektierung. Hierbei kann den verschiedenen Eigenschaften eines Objekts mit Hilfe mehrerer derartiger Dialoge entsprechend des Zustands der Zustandsvariable bzw. des Prozesswertes eine Reihe von Werten zugewiesen werden. Alternativ kann diese Menge von Eigenschaften des entsprechenden Objekts mit Hilfe von so genannten Skripten (C- oder VB-Skripte) beschrieben werden.

Die oben beschriebene Vorgehensweise ist für den Projekteur relativ aufwändig, da er die grafischen Objektänderungen über mehrere Dialogfenster projektieren muss oder entsprechende Skripte, d.h. Codes, schreiben muss.

Die Aufgabe der vorliegenden Erfindung besteht daher darin, dem Projekteur eine einfache Möglichkeit zur Beschreibung der grafischen Eigenschaften dynamischer Objekte zur Verfügung zu stellen.

Die Aufgabe wird erfindungsgemäß gelöst durch eine Vorrichtung zur grafischen Projektierung mindestens einer Oberfläche eines zur Visualisierung und/oder Steuerung einer automatisierten Anlage dienenden Bedien- und Beobachtungssystems, mit Auswahlmitteln zur Selektion eines auf der zu projektierenden Oberfläche darzustellenden grafischen Objektes durch einen Projekteur, wobei das Objekt eine Zustandsvariable der automatisierten Anlage repräsentiert, mit einer Eingabemaske zur Eingabe von Bedingungen, die die grafischen Eigenschaften des Objektes beschreiben durch den Projekteur, wobei die grafischen Eigenschaften des Objektes in Abhängigkeit vom aktuellen Wert der Zustandsvariablen darstellbar sind.

Die Aufgabe wird weiterhin gelöst durch ein Verfahren zur grafischen Projektierung mindestens einer Oberfläche eines zur Visualisierung und/oder Steuerung einer automatisierten Anlage dienenden Bedien- und Beobachtungssystems, bei dem ein auf der zu projektierenden Oberfläche darzustellendes grafisches Objekt durch einen Projekteur ausgewählt wird, wobei das Objekt eine Zustandsvariable der automatisierten Anlage repräsentiert, die grafischen Eigenschaften des Objektes beschreibende Bedingungen durch den Projekteur eingegeben werden und wobei die grafischen Eigenschaften des Objektes in Abhängigkeit vom aktuellen Wert der Zustandsvariablen dargestellt werden.

Der Erfindung liegt die Erkenntnis zugrunde, dass gerade im Rahmen eines Bedien- und Beobachtungssystems, welches zur Visualisierung eines Zustands, beispielsweise einer automatisierten Anlage, dient, besonders viele dynamische Objekte, deren grafische Eigenschaften in Abhängigkeit vom Zustand der Anlage bzw. von Zustandsvariablen oder Prozesswerten eines Automatisierungssystems abhängig sind, verwendet werden. Für einen Projekteur ist es somit besonders aufwändig, die den Zustandsvariablen entsprechenden grafischen Eigenschaften jeweils den entsprechenden Objekten einzeln zuzuweisen. In der Regel geschieht dies durch verschiedene Dialoge, die vom Projekteur einzeln aufgerufen und mit den entsprechenden Eigenschaften der Zustandsvariablen belegt werden müssen.

Diese Tätigkeit wird dem Projekteur insbesondere durch den Gegenstand der vorliegenden Erfindung erleichtert, da der Projekteur innerhalb einer Vorrichtung die den Zustandsvariablen bzw. Prozesswerten entsprechenden grafischen Eigenschaften der Objekte den Objekten dynamisch zuweisen kann. Hierbei wählt der Projekteur lediglich eine Variable aus, deren verschiedene Zustände dann in der Vorrichtung dargestellt werden. Jedem dieser Zustände kann der Projekteur dann verschiedene grafische Eigenschaften zuweisen.

Hierbei handelt es sich somit um eine einfache, schnelle und grafische Projektierungsmöglichkeit für ein Bedien- und Beobachtungssystem. Der Projekteur kann sich eine für seinen Bedarf benötigte Animation bzw. Veränderung der grafischen Darstellung eines Objektes einfach und schnell beispielsweise mit Hilfe von Mausklicks erzeugen. Die entsprechende Animation wird anschließend in der Runtime-Version des Bedien- und Beobachtungssystems direkt ausgeführt.

Eine weitere vorteilhafte Ausbildung der Erfindung ist dadurch gekennzeichnet, dass das Bedien- und Beobachtungssystem zur Visualisierung und/oder Steuerung eines industriellen, automatisierten Prozesses und/oder eines Stromverteilernetzes und/oder einer verkehrstechnischen Infrastruktur vorgesehen ist. Mit Hilfe der erfindungsgemäßen Vorrichtung, die im Rahmen des Engineering für ein Bedien- und Beobachtungssystem verwendet wird, können somit die grafischen Objekte, welche die unterschiedlichsten Zustände in verschiedenen komplexen Systemen repräsentieren, dynamisch dargestellt werden. So ist es möglich, die Produktions- oder Fertigungsprozesse einer automatisierten Anlage auf dem Bedien- und Beobachtungssystem zu visualisieren. Desgleichen kann beispielsweise auch die Überwachung eines Stromverteilernetzes mit Hilfe einer zu projektierenden Leitwarte entsprechend visualisiert werden. Vorstellbar ist ebenfalls, dass im Rahmen von Überwachungen von Infrastrukturnetzen, beispielsweise Verkehrssystemen, die erfindungsgemäße Vorrichtung für das Engineering der jeweiligen Bedien- und Beobachtungssysteme der Leittechnik verwendet wird.

Eine weitere vorteilhafte Ausbildung der Erfindung ist dadurch gekennzeichnet, dass die Eingabemaske zur Eingabe der die grafischen Eigenschaften des Objekts beschreibenden Bedingungen als Tabelle ausgebildet ist. Hierbei wird dem Anwender eine einfache Möglichkeit gegeben, innerhalb der Vorrichtung die entsprechenden Variablen, nachdem er sie ausgewählt hat, mit den von ihm gewünschten Eigenschaften für die verschiedenen Zustände zu belegen. Die Verwendung einer Tabelle bzw. eines so genannten Grids ist für den Anwender einfach nachvollziehbar und übersichtlich.

Eine weitere vorteilhafte Ausbildung der Erfindung ist dadurch gekennzeichnet, dass die Tabelle eine Kopfzeile zur Auswahl von für das darzustellende Objekt zu visualisierenden Eigenschaften aufweist. Hier wird beispielsweise innerhalb der obersten Zeile der Tabelle durch den Anwender ausgewählt, welche Eigenschaften er bei dem entsprechenden Objekt dynamisch verändern möchte. Dabei kann es sich beispielsweise um die Breite oder die Farbe des darzustellenden Objektes oder eine das darzustellende Objekt umgebende Linie oder weitere grafische Eigenschaften handeln. Die entsprechenden Gruppen von Eigenschaften können von dem Anwender auf einfache Weise aus der Kopfzeile der Tabelle bzw. des Grids ausgewählt werden.

Eine weitere vorteilhafte Ausbildung der Erfindung ist dadurch gekennzeichnet, dass ein Kontextmenü zur Auswahl der zu visualisierenden Eigenschaften vorgesehen ist. Hierbei wird dem Anwender innerhalb der Kopfzeile beispielsweise durch ein sich aufblätterndes Kontextmenü bei einer Maus-over-Aktion angegeben, welche grafischen Eigenschaften für Objekte überhaupt zur Verfügung stehen. Durch das Auswählen einer entsprechenden grafischen Eigenschaft in dem aufgeblätterten Menü aus der Kopfzeile kann der Anwender diese grafische Eigenschaft dann entsprechend in die Tabelle aufnehmen und anschließend mit Werten für die Variable belegen.

Eine weitere vorteilhafte Ausbildung der Erfindung ist dadurch gekennzeichnet, dass innerhalb der Tabelle Spalten zur Eingabe der die grafischen Eigenschaften beschreibenden Bedingungen vorgesehen sind. Innerhalb der Tabelle kann hier der Anwender dann für die von ihm ausgewählten Eigenschaften, die das Objekt darstellen sollen, die entsprechenden Bedingungen eintragen. Beispielsweise kann er für die Eigenschaft "Vordergrundfarbe" dann eine bestimmte Farbe auswählen und diese in der entsprechenden Zeile, die dem Zustandswert der Variable zugewiesen ist, eintragen. Auf diese Weise ist ein leichtes Befüllen der Tabelle und ein einfaches Zuweisen von Bedingungen für die Eigenschaften der darzustellenden grafischen Objekte gewährleistet.

Eine weitere vorteilhafte Ausbildung der Erfindung ist dadurch gekennzeichnet, dass die Bedingungen über eine vorgegebene Auswahlliste auswählbar und/oder frei durch den Projekteur der Vorrichtung eingebbar sind. Beispielsweise ist es möglich, dass bei der Auswahl von verschiedenen Farben eine Auswahlliste vorgegeben wird, aus der der Projekteur dann die von ihm gewählte Farbe für einen bestimmten Wert der Zustandsvariable auswählt und zuweist. Des Weiteren ist es jedoch auch möglich, dass der Projekteur beispielsweise die Breite oder Höhe oder Länge eines Objektes als grafische Eigenschaft direkt mit Hilfe von alphanumerischen Werten in die Tabelle eingibt. Hierdurch ist ein einfaches Befüllen der Tabelle gewährleistet.

Eine weitere vorteilhafte Ausbildung der Erfindung ist dadurch gekennzeichnet, dass die Tabelle zur Darstellung der möglichen Status der Zustandsvariablen vorgesehen ist, wobei einem Status ein die grafischen Eigenschaften beschreibender Wert zuweisbar ist. Hierbei wird es dem Anwender ermöglicht, nicht nur einen Wertebereich für die jeweilige Variable innerhalb der Tabelle angeben zu können, innerhalb dessen eine bestimmte grafische Eigenschaft vom entsprechenden Objekt angenommen werden soll, sondern dem Projekteur wird zudem ermöglicht, sich den Tag-Status der entsprechenden Prozessvariable anzeigen zu lassen und diesen Tag-Status mit einem entsprechenden Wert, der eine dem Status dann entsprechende Eigenschaft des grafischen Objektes zuweist, zu belegen. Hierdurch sieht der Anwender auf einen Blick den Verlauf der Veränderung der entsprechenden Variable. Er kann somit direkt sehen, wie sich das Objekt bei welchem Status verhält.

Im Folgenden wird die Erfindung anhand der in den Figuren dargestellten Ausführungsbeispiele näher beschrieben und erläutert.

Es zeigen:
- FIG 1: eine Vorrichtung zur Projektierung einer Oberfläche eines Bedien- und Beobachtungssystems,
- FIG 2: eine Eingabemaske zur Eingabe von Eigenschaften für Objekte,
- FIG 3: eine weitere Eingabemaske zur Eingabe von Eigenschaften der Objekte,
- FIG 4: eine Auswahlliste zur Eingabe von Eigenschaften der Objekte.

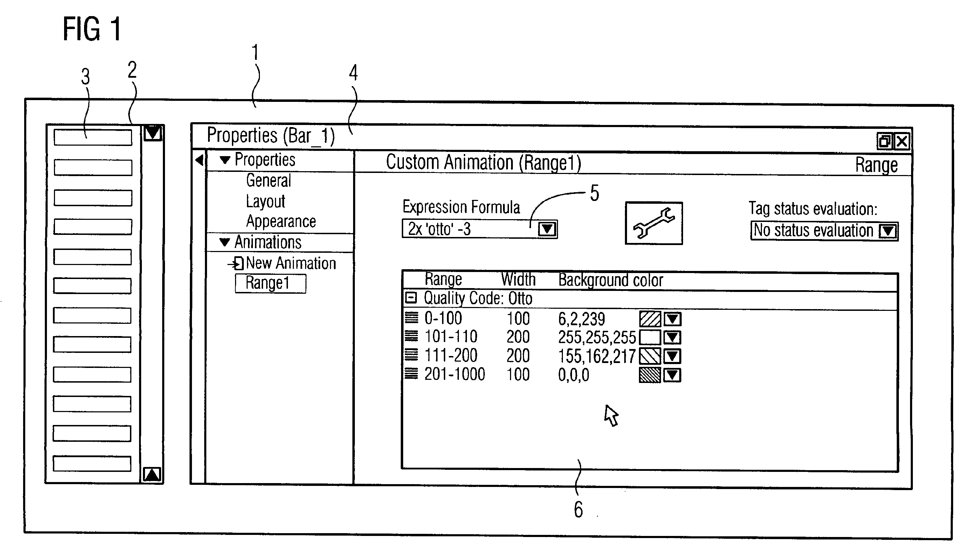

FIG 1 zeigt eine Vorrichtung 1 zur grafischen Projektierung von Bedien- und Beobachtungssystemen. Die Vorrichtung 1 weist Auswahlmittel 2 zur Selektion eines Objektes 3 aus einer Menge von möglichen Objekten auf, die auf der Oberfläche des Bedien- und Beobachtungssystems dargestellt werden sollen. Alternativ kann das Objekt auch direkt ausgewählt werden, ohne über die Auswahlmittel zu gehen. Es kann über Mehrfachselektion auch eine größere Menge von Objekten gleichzeitig ausgewählt werden.

Des Weiteren ist eine Eingabemaske 4 für ein ausgewähltes Objekt 3 dargestellt. Die Eingabemaske verfügt über ein Eingabefeld 5 in das über eine Liste Zustandsvariablen bzw. Prozesswerten, die dem Objekt, welches auf dem Bedien- und Beobachtungssystem visualisiert werden soll, ausgewählt oder auch händisch eingegeben werden können.

Insbesondere die Möglichkeit, dass neben der Auswahl auch die Eingabe von Zustandsvariablen oder Prozesswerten möglich ist, verleiht dem Erfindungsgemäßen System eine größtmögliche Flexibilität. Hierdurch ist es dem Projekteur möglich, eine Variable zu wählen und sie gleichzeitig mit einfachen arithmetischen Operanden zu verknüpfen. So kann er beispielsweise "Otto" doppelt so groß erscheinen lassen, wenn es sich um eine wichtige Zustandsvariable handelt. Eine einfache möglichkeit der Skalierbarkeit ist dadurch gegeben.

Des Weiteren weist die Eingabemaske 4 eine Tabelle 6 bzw. ein so gennantes Grid auf, innerhalb dessen die Bedingungen für die Darstellung der Eigenschaften des Objektes angegeben bzw. ausgewählt werden können. Zu der ausgewählten Prozess- bzw. Zustandsvariable werden in der Tabelle 6 dann die entsprechenden Werte, die die Variable annehmen kann, mit den Werten für die Eigenschaften des Objektes verknüpft.

In der dargestellten Figur möchte beispielsweise ein Anwender in seinem Engineering-System für das Bedien- und Beobachtungssystem ein Objekt, beispielsweise ein Button oder ein Rechteck auf der Oberfläche des Bedien- und Beobachtungssystems erzeugen und diesem Objekt ein dynamisches Verhalten bzw. eine Animation anhand der Zustands- bzw. Prozessvariable "Otto" zuweisen. Hierfür wird innerhalb der Tabelle in der Spalte "Range" ein Wertebereich angegeben, dem dann in den zwei folgenden Spalten "Width" und "Background Colour" die entsprechenden Zustände für die Eigenschaften des darzustellenden Objektes zugewiesen werden. Beispielsweise soll die Breite des darzustellenden Objektes einen Wert von 100 annehmen, wenn der Wert der Variable "Otto" zwischen 0 und 100 liegt. In diesem Fall soll ebenfalls eine Hintergrundfarbe zugewiesen werden, welche durch die numerischen Werte 6, 2, 239 definiert wird. Die in der Tabelle beschriebenen Zustände für die grafischen Eigenschaften des darzustellenden Objektes beziehen sich hierbei lediglich auf das ausgewählte Objekt, in diesem Fall bar_1, welches vorher über die Auswahlmittel von dem entsprechenden Projekteur ausgewählt wurde. Für alle Eigenschaften des Objektes, beispielsweise Backgroundcolour oder Border, gelten dann die gleichen Werte des Ausdrucks, die Farben des Objektes können jedoch unterschiedlich sein.

Damit ein Objekt auch in unterschiedlicher Form dargestellt werden kann, ist es möglich, dass mehrere Animationen an ein Objekt gehängt werden. Dadurch gelten dann nicht für alle Eigenschaften des Objekts die gleichen Werte des Ausdrucks.

Des Weiteren ist es auch möglich, mehrere Objekte auszuwählen und sie gemeinsam mit einer Animation zu versehen, so dass für diese Menge von Objekten die gleichen Werte gelten und die Objekte somit gleichförmig dargestellt werden bzw. animiert werden.

Mit Hilfe der in FIG 1 dargestellten Vorrichtung kann der Anwender seine Animation dann selbst so gestalten, wie er sie benötigt. Er kann anhand einer Bedingung (Spalte "Range") mehrere Eigenschaften eines Objektes, in dem vorliegenden Beispiel Breite und Hintergrundfarbe, dynamisieren.

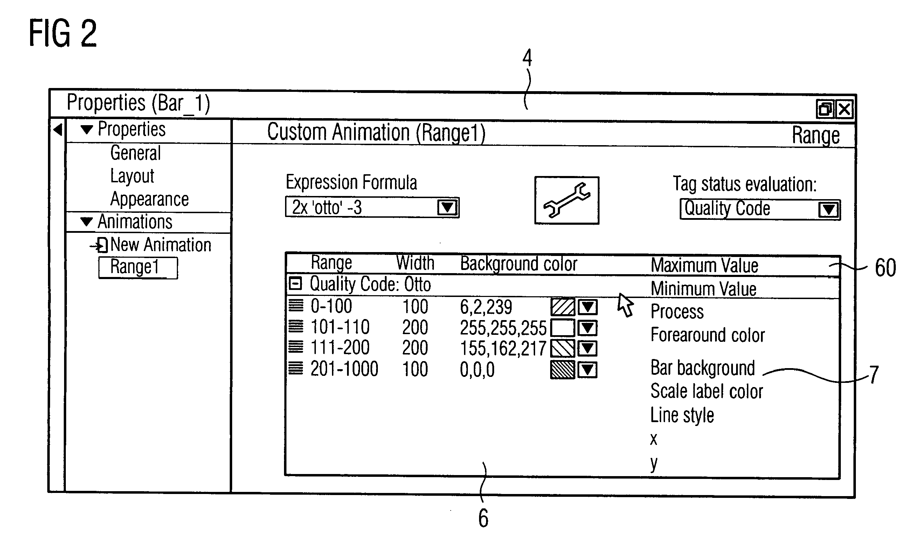

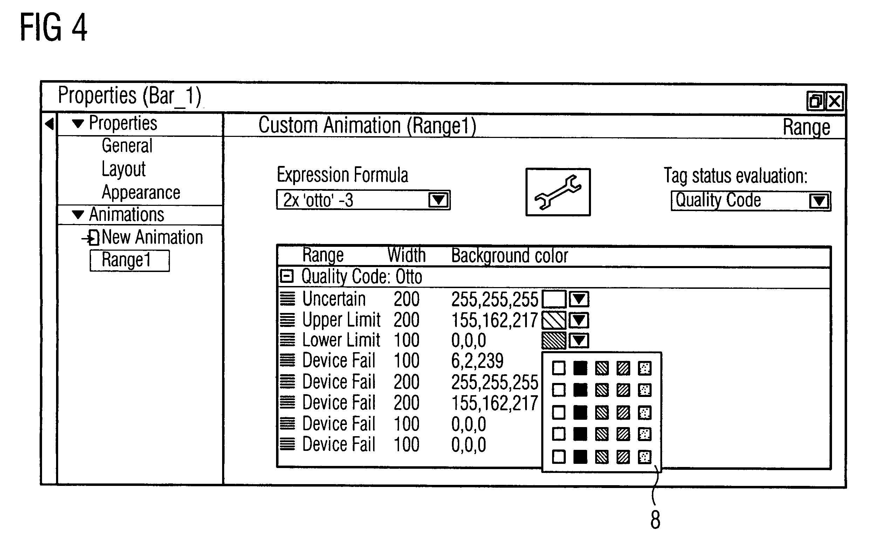

FIG 2 zeigt eine Eingabemaske 4 der erfindungsgemäßen Vorrichtung, bei der in der Kopfzeile 60 der Tabelle 6 die für die Darstellung des Objektes benötigten Eigenschaften mit Hilfe eines so genannten Kontextmenüs 7 in der Tabellenkopfzeile bzw. der Grid-Überschrift durch den Anwender ausgewählt werden können. Hierbei blättert sich durch ein Maus-over an der Stelle der Kopfzeile 60 oder durch eine entsprechende Eingabe über Tastatur das Kontextmenü 7 mit möglichen grafischen Eigenschaften für die Objekte auf. Aus dieser Liste kann der Anwender dann die von ihm gewünschten darzustellenden Eigenschaften auswählen. Für jede weitere ausgewählte Eigenschaft wird dann innerhalb des Fensters bzw. der Eingabemaske für das entsprechende Objekt in dem Grid bzw. der Tabelle eine Spalte angelegt. In diese Spalte kann der Anwender dann wiederum Eigenschaften-spezfische Werte eingeben. Hierbei können Eigenschaften-spezifische Werte sowohl frei wählbar sein als auch unterstützt durch eine Auswahlliste 8 projektiert werden. Zu letzteren kann beispielsweise die Farbauswahl für die Objekte gehören. Dies ist in FIG 4 beispielhaft dargestellt.

In das Grid bzw. die Tabelle können vom Anwender beliebig viele neue Eigenschaften, die innerhalb der Vorrichtung zur Verfügung stehen, hinzugefügt werden. Die benötigte Spalte wird vom System bzw. der Vorrichtung dann automatisch hinzugefügt.

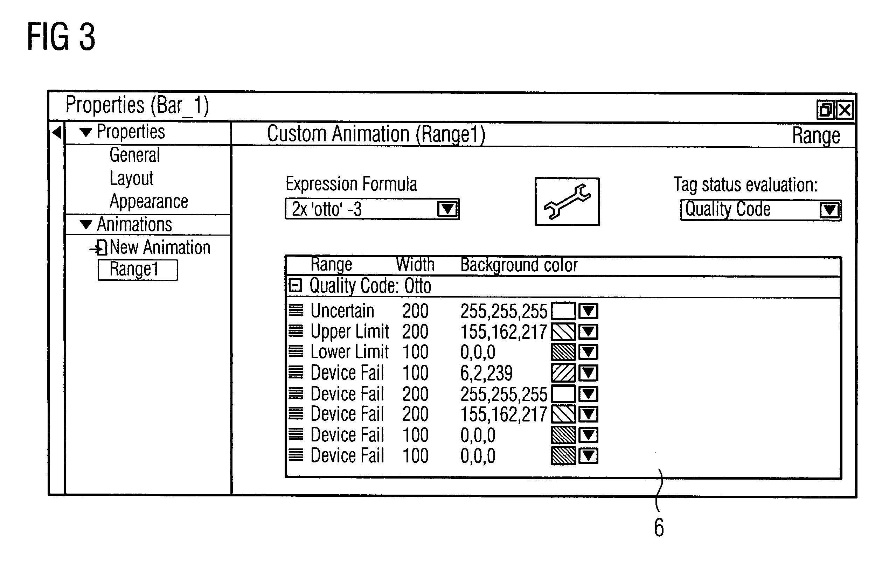

FIG 3 zeigt eine Eingabemaske 4 für die Eingabe von Werten für Eigenschaften zur grafischen Darstellung der Objekte, bei der innerhalb des Grids bzw. der Tabelle 6 zusätzlich ein Tag-Status (Quality Code oder Variablenstatus) angegeben ist. Hierbei kann der Anwender dann für diesen Tag-Status das entsprechende Verhalten der Objekte durch Eingabe der die Eigenschaften beschreibenden Werte in die Tabelle definieren. Alternativ kann durch das System auch vorgegeben werden, welche Werte die Status haben und der Anwender kann nur angeben, ob das entsprechende Objekt angezeigt wird oder nicht.

Hierbei sieht der Anwender auf einen Blick den Auswerteablauf, d.h. er sieht, wie sich das Objekt bei welcher Bedingung verhält. In FIG 3 wurde das Verhalten derart definiert, dass der Tag "Otto" den Quality Code "uncertain", "upper limit" usw. hat. Den entsprechenden Quality Codes werden dann in den weiteren, in der Tabelle bzw. dem Grid vorkommenden bzw. angelegten Spalten die entsprechenden Werte wieder zugewiesen. Hierbei ist es dem Anwender des Systems bzw. der Vorrichtung überlassen, ob der Tag-Status aufgeblendet werden soll oder nicht. Zur besseren Übersichtlichkeit kann der Tag-Status auch geschlossen werden.

## Patentansprüche

1. Vorrichtung (1) zur grafischen Projektierung mindestens einer Oberfläche eines zur Visualisierung und/oder Steuerung einer automatisierten Anlage dienenden Bedien- und Beobachtungssystems,
• mit Auswahlmitteln (2) zur Selektion eines auf der zu projektierenden Oberfläche darzustellenden grafischen Objektes (3) durch einen Projekteur, wobei das Objekt eine Zustandsvariable der automatisierten Anlage repräsentiert und
• mit einer Eingabemaske (4) zur Eingabe von die grafischen Eigenschaften des Objektes beschreibenden Bedingungen durch den Projekteur, wobei die grafischen Eigenschaften des Objektes in Abhängigkeit vom aktuellen Wert der Zustandsvariablen darstellbar sind.

2. Vorrichtung nach Anspruch 1, wobei das Bedien- und Beobachtungssystem zur Visualisierung und/oder Steuerung eines industriellen, automatisierten Prozesses und/oder eines Stromverteilernetzes und/oder einer verkehrstechnischen Infrastruktur vorgesehen ist.

3. Vorrichtung nach Anspruch 1 oder 2, wobei die Eingabemaske zur Eingabe der die grafischen Eigenschaften des Objektes beschreibenden Bedingungen als Tabelle (6) ausgebildet ist.

4. Vorrichtung nach Anspruch 3, wobei die Tabelle eine Kopfzeile 60 zur Auswahl von für das darzustellende Objekt zu visualisierende Eigenschaften aufweist.

5. Vorrichtung nach Anspruch 4, wobei ein Kontextmenü (7) zur Auswahl der zu visualisierenden Eigenschaften vorgesehen ist.

6. Vorrichtung nach einem der Ansprüche 3 bis 5, wobei innerhalb der Tabelle Spalten zur Eingabe der die grafischen Eigenschaften beschreibenden Werte vorgesehen sind.

7. Vorrichtung nach einem der Ansprüche 3 bis 6, wobei die Werte über eine vorgegebene Auswahlliste (8) auswählbar und/oder frei durch den Projekteur der Vorrichtung eingebbar sind.

8. Vorrichtung nach einem der Ansprüche 3 bis 7, wobei die Tabelle zur Darstellung der möglichen Status der Zustandsvariablen vorgesehen ist.

9. Vorrichtung nach Anspruch 8, wobei einem Status ein die grafischen Eigenschaften beschreibender Wert zuweisbar ist.

10. Verfahren zur grafischen Projektierung mindestens einer Oberfläche eines zur Visualisierung und/oder Steuerung einer automatisierten Anlage dienenden Bedien- und Beobachtungssystems, bei dem
• ein auf der zu projektierenden Oberfläche darzustellendes grafisches Objekt durch einen Projekteur ausgewählt wird, wobei das Objekt eine Zustandsvariable der automatisierten Anlage repräsentiert und
• die grafischen Eigenschaften des Objektes beschreibende Bedingungen durch den Projekteur eingegeben werden, wobei die grafischen Eigenschaften des Objektes in Abhängigkeit vom aktuellen Wert der Zustandsvariablen dargestellt werden.

11. Verfahren nach Anspruch 10, bei dem das Bedien- und Beobachtungssystem einen industriellen, automatisierten Prozess und/oder ein Stromverteilernetz und/oder eine verkehrstechnische Infrastruktur visualisiert und/oder steuert.

12. Verfahren nach Anspruch 10 oder 11, bei dem die die grafischen Eigenschaften des Objektes beschreibenden Bedingungen in eine Tabelle eingegeben werden.

13. Verfahren nach Anspruch 12, bei dem die für das darzustellende Objekt zu visualisierende Eigenschaften über eine Kopfzeile der Tabelle ausgewählt werden.

14. Verfahren nach Anspruch 13, bei dem die zu visualisierenden Eigenschaften über Kontextmenü ausgewählt werden.

15. Verfahren nach einem der Ansprüche 12 bis 14, bei dem die Tabelle über Spalten zur Eingabe der die grafischen Eigenschaften beschreibenden Werte verfügt.

16. Verfahren nach einem der Ansprüche 12 bis 15, bei dem die Werte über eine vorgegebene Auswahlliste ausgewählt und/oder frei durch den Projekteur der Vorrichtung eingegeben werden.

17. Verfahren nach einem der Ansprüche 12 bis 16, bei dem die möglichen Status der Zustandsvariablen in der Tabelle dargestellt werden.

18. Verfahren nach Anspruch 17, bei dem einem Status ein die grafischen Eigenschaften beschreibender Wert zugewiesen wird.
